Europäisches Patentamt

European Patent Office

Office européen des brevets

(11) Veröffentlichungsnummer: **0 600 987 B1**

(19)

## (12) EUROPÄISCHE PATENTSCHRIFT

(45) Veröffentlichungstag der Patentschrift: **15.02.95**

(51) Int. Cl.6: **B28B 1/52**

(21) Anmeldenummer: **92917909.1**

(22) Anmeldetag: **17.08.92**

(86) Internationale Anmeldenummer:
**PCT/EP92/01870**

(87) Internationale Veröffentlichungsnummer:
**WO 93/04829 (18.03.93 93/08)**

(54) **VERFAHREN ZUR KONTINUIERLICHEN BILDUNG EINER GLEICHFÖRMIGEN SCHICHT VON STREUGUT UND VORRICHTUNG ZUR DURCHFÜHRUNG DES VERFAHRENS.**

(30) Priorität: **29.08.91 DE 4128636**

(43) Veröffentlichungstag der Anmeldung:
**15.06.94 Patentblatt 94/24**

(45) Bekanntmachung des Hinweises auf die
Patenterteilung:
**15.02.95 Patentblatt 95/07**

(84) Benannte Vertragsstaaten:
**BE DE ES FR GB GR IE IT NL**

(56) Entgegenhaltungen:
**DE-A- 3 439 493**
**DE-A- 3 719 129**
**DE-B- 2 552 157**
**US-A- 2 822 028**

(73) Patentinhaber: **BABCOCK-BSH AKTIENGE-
SELLSCHAFT vormals Büttner-Schilde-Haas
AG
Postfach 6
D-47811 Krefeld (DE)**

(72) Erfinder: **BOLD, Jörg
Ohlkasterhohl 2
D-67657 Kaiserslautern (DE)**

(74) Vertreter: **Frese-Göddeke, Beate, Dr. et al
Babcock-BSH Aktiengesellschaft,
vormals Büttner-Schilde-Haas AG,
Postfach 6
D-47811 Krefeld (DE)**

EP 0 600 987 B1

**Beschreibung**

Bei der Herstellung von Bauplatten wird häufig ein Streuverfahren, d.h. ein trockenes oder quasitrockenes Herstellungsverfahren, angewandt. Dabei wird ein Gemisch von Bindemitteln, Verstärkungsmaterialien und Füllstoffen auf ein bewegtes Formband gestreut und anschließend in einer Presse verdichtet. Wie z.B. aus der DE-A-34 39 493 bekannt, wird die Schicht aus mehreren auf das Formband gestreuten Lagen aufgebaut.

In der DE-A-37 19 129 ist ein gattungsgemäßes Verfahren zur kontinuierlichen Bildung einer gleichförmigen Schicht von Streugut sowie eine gattungsgemäße Vorrichtung zur Durchführung des Verfahrens beschrieben. Dabei wird das kontinuierlich ankommende Streugut mittels eines quer über ein Ablageband pendelnden Fallschachtes in Streifen abgelegt. Die Ablageperiode und die Geschwindigkeit des Ablagebandes sind so aufeinander abgestimmt, daß sich ein Streifen derart an den anderen legt, daß eine lückenlose Überdeckung des Ablagebandes stattfindet. Neben dieser Abstimmung kann die Translationsgeschwindigkeit des Fallschachtes fein variiert werden, um systematische, über die Breite der Streuschicht auftretende Höhenvariationen der abgelegten Schicht auszugleichen.

Dazu wird das Dickenprofil der gestreuten Schicht gemessen und die Ergebnisse zum Einstellen des Geschwindigkeitsprofiles des pendelnden Fallschachtes verwendet. Auf diese Weise kann dem sich natürlich einstellenden Massenprofil entgegengewirkt werden.

Im weiteren Verlauf ist über dem Ablageband eine als Stachelwalze ausgebildete Rückstreifwalze angeordnet, wobei ihre Drehrichtung so gewählt ist, daß sie überständiges Material in Laufrichtung des Ablagebandes wirft. Diese Maßnahme ist dann besonders wichtig, wenn schnell abbindende, befeuchtete, gipshaltige Mischungen gestreut werden sollen.

Bei diesem Verfahren treten immer noch Höhenschwankungen der fertigen Platten von 5 bis 10 % auf. Derartige Höhenschwankungen treten insbesondere bei den breiteren Platten mit einer Breite von etwa 2,50 m auf. Bei den entsprechenden größeren Streubreiten wird notwendigerweise auch die Höhe des Fallschachtes größer. Dadurch bekommt der Strom des fallenden Streugutes eine erhebliche Geschwindigkeit und kinetische Energie, die sich in unkontrollierbaren Bewegungen des Gutes beim Auftreffen auf das Ablageband auswirken. Die lückenlose Überdeckung ist damit nicht gewährleistet. Es bildet sich vielmehr eine Schicht, die sehr wellig ist und sogar Löcher aufweisen kann.

Die Stachelwalzen sind unter diesen Bedingungen nicht in der Lage die Unebenheiten auszugleichen, wenn sie in Förderrichtung arbeiten. In der praktischen Anwendung hat sich gezeigt, daß eine Vergleichmäßigung nur in der konventionellen Weise möglich ist, indem die Stachelwalzen in Gegenrichtung arbeiten und das überständige Material zurückstreifen.

Dieses Vorgehen hat erhebliche Nachteile, wenn feuchte, gipshaltige Mischungen gestreut werden. Hinter der Stachelwalze bilden sich dabei nämlich Materialanhäufungen, die rotieren, und in deren Kern das Material minutenlang gefangen werden kann.

Aufgabe der Erfindung ist es, ein Verfahren zur kontinuierlichen Bildung einer gleichförmigen Schicht von Streugut gemäß dem Oberbegriff des Anspruchs 1 und eine Vorrichtung zur Durchfuhrung eines Verfahrens nach Anspruch 1 gemäß dem Oberbegriff des Anspruchs 7 zu entwickeln, das eine bessere Vergleichmäßigung der gestreuten Schicht ermöglicht und damit auch für größere Streubreiten geeignet ist.

Die Aufgabe wird durch Merkmale der Kennzeichen der Ansprüche 1 und 7 gelöst.

Der jeweilige Zwischenmassenstrom wird mit der Kämmvorrichtung über eine sich in seine Laufrichtung ausdehnende Kämmfläche geglättet. Durch das flächige Kämmen kann eine wesentlich bessere Vergleichmäßigung des in Streifen abgelegten Streugutes erzielt werden als mit einer Stachelwalze.

Dabei sollte eine wirksame Länge der Kämmfläche von mindestens dem 7-Fachen des Abstandes zweier Streifen eingehalten werden. Die wirksame Länge ist um die Differenz der Geschwindigkeit der Kammwerkzeuge in Laufrichtung des Ablagebandes und der Geschwindigkeit des Ablagebandes bezogen auf Geschwindigkeit der Kammwerkzeuge geringer als die Länge der Kämmfläche. Um die Länge der Kämmfläche nicht zu groß werden zu lassen, sollte die Geschwindigkeit der Kämmwerkzeuge ein Vielfaches der Geschwindigkeit des Ablagebandes sein, vorzugsweise mindestens das 8-Fache.

Eine weitere wesentliche Verbesserung der Vergleichmäßigung der Schicht nach der Kämmvorrichtung erhält man, wenn der Abstand der Kämmfläche zum Ablageband auf einen Wert, der wenig unterhalb der mittleren Höhe der durch die Streifen gebildeten Schicht liegt, eingestellt wird.

Eine leichte Abnahme des Abstandes der Kämmfläche zum Ablageband in dessen Laufrichtung trägt zusätzlich zur Vergleichmäßigung der Schicht bei.

Eine besonders gute Vergleichmäßigung erhält man, wenn der Abstand der Kämmfläche zum Ablageband gemäß Anspruch 2 auf 70 bis 98 % der mittleren Höhe der Schicht und/oder um einen Wert zwischen 0 und 3 % in Laufrichtung des Ablagebandes gemäß Anspruch 3 abnimmt.

Die Vergleichmäßigung ist so gut, daß selbst Lücken, die bei großen Streubreiten auftreten, ausgeglichen werden können. Auch periodische Erhebungen und Täler in Laufrichtung, die bei einem nicht präzise abgestimmten Ablegen durch überlappende Streifen entstehen, können ausgeglichen werden.

Hinter der Kämmvorrichtung wird eine über die gesamte Breite gleich dicke Schicht erzielt.

Gemäß Anspruch 4 wird der Zwischenmassenstrom nach dem Glätten und vor dem Streuen auf einem Streuband abgelegt. Die Ablage auf einem zusätzlichen Streuband, beispielsweise mit Hilfe einer Abwurfwalze, ermöglicht eine einfache Anpassung an Änderungen der Formbandgeschwindigkeit durch Änderung der Streubandgeschwindigkeit, ohne die Geschwindigkeit des Ablagebandes verändern zu müssen. Außerdem kann durch Variation der Streubandgeschwindigkeit die optimale Höhe der geglätteten Schicht vor der Streumaschine eingestellt werden.

Die Messung des Massenprofiles auf dem Streuband gemäß Anspruch 5 ist einfacher durchzuführen als eine Messung in oder direkt hinter der Streuvorrichtung, deren Umfeld stets unter dickem Staub liegt. Sie vermeidet auch die Berücksichtigung der durch den Preßvorgang erzeugten Dickenfehler, die bei einer Messung der fertigen Platten mit einbezogen werden.

Das Merkmal des Anspruchs 6 ist besonders für vorgefeuchtetes Streugut geeignet, in dem die Feuchte im wesentlichen gleichmäßig verteilt und somit proportional zur Gesamtmasse ist.

Die Vorrichtung gemäß Anspruch 7 ist zur Durchführung des Verfahrens nach Anspruch 1 geeignet. Kämmwerkzeuge sind z.B. Nocken, Stifte, Paddeln oder Leisten.

Anspruch 8 beschreibt eine einfache Ausführungsform der Vorrichtung. Bei einer Länge des Ablagebandes um das 8 bis 15-Fache der unteren Öffnung des Fallschachtes und bei sich über die gesamte freie Länge des Ablagebandes erstreckenden Trägern genügt eine etwa 8-Fach größere Geschwindigkeit der Träger bzw. der Kämmwerkzeuge zur Durchführung des Verfahrens nach Anspruch 1.

Die Kämmvorrichtung gemäß Anspruch 9 ist mit geringem Aufwand herzustellen.

Die Kämmvorrichtung des Anspruchs 10 hat den Vorteil, daß der Antrieb zur Bewegung der Träger, d.h. der Platten oder Rahmen, sich in einer bestimmten Entfernung zur zu glättenden Schicht befindet und damit weniger durch aufgewirbeltes Streugut verschmutzt wird.

Die Vorrichtung des Anspruchs 12 ist besonders zur Durchführung des Verfahrens nach Anspruch 5 geeignet.

Die Erfindung wird anhand zweier in der Zeichnung schematisch dargestellter Beispiele weiter erläutert.

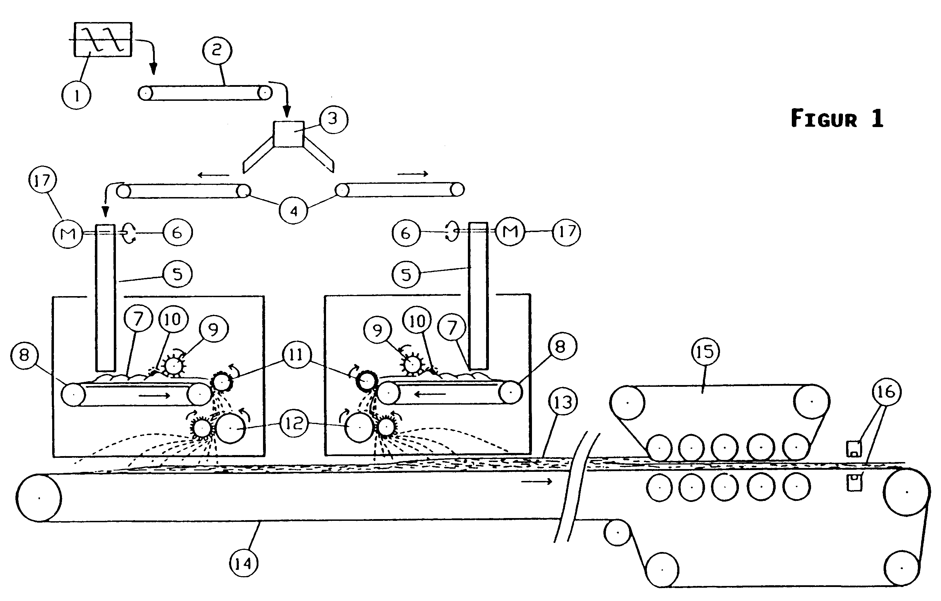

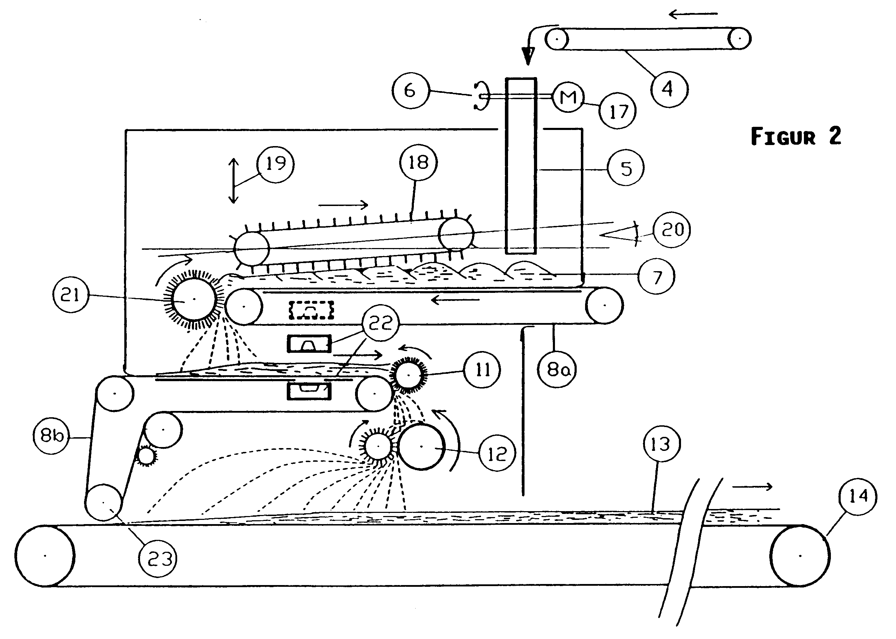

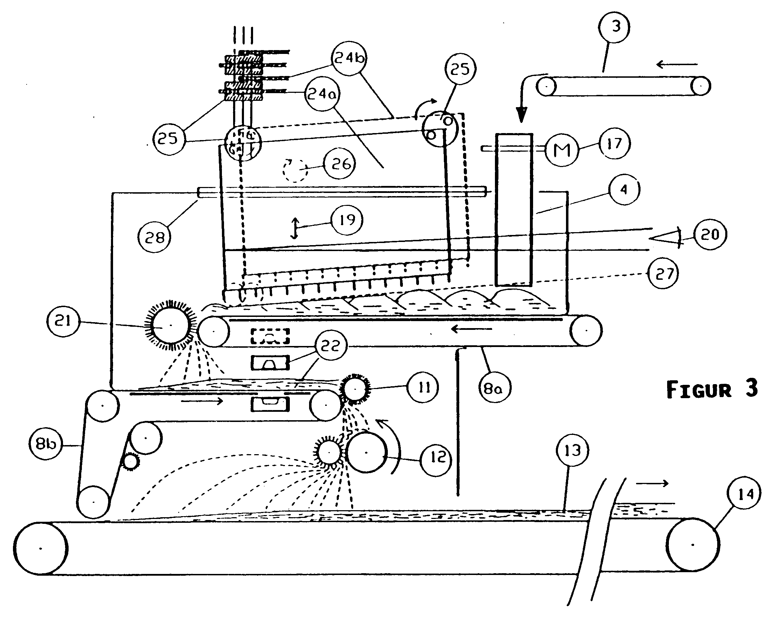

Dabei zeigt Figur 1 eine Vorrichtung des Standes der Technik, Figur 2 eine Vorrichtung des ersten Beipiels und Figur 3 eine Vorrichtung des zweiten Beispiels. Die Figuren 2 und 3 zeigen jeweils nur den Teil der Vorrichtung, der zu einem Zwischenmassenstrom gehört.

Stand der Technik:

Eine in Figur 1 dargestellte Vorrichtung weist einen Mischer 1 auf, dessen Ausgang auf ein Band 2 mündet. Das Band 2 führt zu einer Verteilvorrichtung 3. Ausgehend von der Verteilvorrichtung 3 führen zwei Zuführbänder 4 zu zwei Fallschächten 5. Jeder Fallschacht 5 ist um eine im oberen Bereich angeordnete Achse 6 schwenkbar.

Figur 1 zeigt weiterhin jeweils mehrere hintereinander abgelegte Streifen 7 des Streugutes auf einem Ablageband 8, das unterhalb der Öffnung des Fallschachtes 5 angeordnet ist. Außerdem weist die Vorrichtung jeweils eine oberhalb des Ablagebandes 8 befindliche Rückstreifwalze 9 zum Glätten der Gutschicht 10, eine Abwurfwalze 11 und eine Streuvorrichtung, im wesentlichen bestehend aus einem Streukopf 12, auf.

Die Streuschicht 13 entsteht auf einem unterhalb der beiden hintereinander angeordneten Streuvorrichtungen verlaufenden Formband 14. Das Formband 14 erstreckt sich bis zu einer Presse 15 und einer dahinter angeordneten Meßvorrichtung 16.

Außerdem sind in Figur 2 noch Motoren 17 zum Schwenken des Fallschachtes 5 eingezeichnet.

Im Betrieb wird das im Mischer 1 gemischte Streugut auf dem Band 2 zu der Verteilvorrichtung 3 gefördert, die die zwei Zuführbänder 4 zu den Fallschächten 5 beschickt. Die Fallschächte 5 schwenken um die Achsen 6, wobei sie Streifen 7 des Streugutes auf das Ablageband 8 ablegen. Die Rückstreifwalze 9 kämmt die Oberfläche der Schicht gegen die Förderrichtung. Aus der DE-A-37 19 129 ist auch eine in Förderrichtung, d.h. in Laufrichtung des Ablagebandes 8, kämmende Stachelwalze bekannt. Die Abwurfbürste 11 wirft das zu streuende Gut auf den eigentlichen Streukopf 12. Durch die hintereinander angeordneten Streuköpfe wird die endgültige Streuschicht 13 auf dem Formband 14 gebildet. Nach der Presse 15 wird mit der Meßvorrichtung 16 die Dicke bzw. ein Dicken- und Dichteprofil gemessen. Die Ergebnisse dieser Messung werden für die Steuerung der Antriebe 17 der Fallschächte 5 verarbeitet.

Beispiel 1:

Beim ersten Beispiel unterscheidet sich eine erfindungsgemäße Vorrichtung folgendermaßen von einer des Standes der Technik:

Die Vorrichtung weist ein wesentlich längeres Ablageband 8a auf. Die Länge des Ablagebandes 8a ausgehend vom Fallschacht 5 beträgt etwa das 8-Fache der unteren Öffnung des Fallschachtes 5, d.h. es können acht Streifen 7 abgelegt werden.

Sie weist eine Kämmvorrichtung mit einem Träger, hier ein um zwei Walzen geführtes Band, mit Nocken 18 auf. Die Kämmvorrichtung erstreckt sich ausgehend vom Fallschacht 5 über die gesamte Länge des Ablagebandes 8a.

Sie erstreckt sich selbstverständlich auch über die gesamte Breite des Ablagebandes 8a.

Die das Band tragenden Walzen sind an einem nicht dargestellten Gerüst einzeln höhenverstellbar befestigt. Dadurch ist die auf der Oberfläche der Schicht aufliegende Kämmfläche, wie durch einen Pfeil 19 angedeutet, insgesamt höhenverstellbar und, wie durch ein Winkelsymbol 20 angedeutet, winkelverstellbar.

Dabei ist die Kämmfläche so angeordnet, daß ihr Abstand zum Ablageband 8a in Laufrichtung des Ablagebandes 8a in einem Winkel zwischen 0° und 3°, hier 2°, abnimmt.

Am Ende des Ablagebandes 8a ist eine zusätzliche Abwurfwalze 21 angeordnet. Die Abwurfwalze ist größer als die Abwurfwalze 11 vor der Streuvorrichtung (Figur 1).

Ebenfalls zusätzlich ist unterhalb der Abwurfwalze 21 ein streuband 8b angeordnet. An seinem Ende befindet sich die Abwurfwalze 11 und die Streuvorrichtung mit dem Streukopf 12.

Eine zweiteilige Meßvorrichtung 22 ist am Streuband 8b unterhalb und oberhalb der geglätteten Schicht angeordnet. Der zweite obere Teil der Meßvorrichtung 22 kann auch, um Verschmutzung zu vermeiden, oberhalb eines Untertrums des Ablagebandes 8a, der oberhalb des Streubandes 8b verläuft, angeordnet sein (in Figur 2 gestrichelt eingezeichnet).

Das Streuband 8b ist zu seiner Reinigung über eine Walze 23 dicht oberhalb des Formbandes 14 außerhalb der gestreuten Schicht geführt. Dies ist besonders bei gipshaltigen, feuchten Mischungen vorteilhaft.

Wie beim Stand der Technik weisen Ablageband 8a und Formband 14 dieselbe Breite auf. Auch das Streuband 8b hat diese Breite.

Im Betrieb wird der durch den Fallschacht 5 zugeführte Zwischenmassenstrom in Streifen 7 auf dem Ablageband 8a abgelegt.

Die gebildete unregelmäßige Schicht aus, hier acht, aneinander anschließenden Streifen 7 wird durch die über den gesamten zugänglichen Bereich des Ablagebandes flächig angreifende Kämmvorrichtung in Laufrichtung des Zwischenmassenstromes abgekämmt.

Dabei ist die Wandergeschwindigkeit der Nocken 18 ein Mehrfaches, hier ein 10-Faches, der Geschwindigkeit des Ablagebandes 8a. Je größer die Geschwindigkeit der Nocken 18, d.h. der Kämmwerkzeuge desto größer ist die wirksame Länge des Kämmens.

Die wirksame Länge der Kämmfläche beträgt hier etwa das 7-Fache des Abstandes zweier Streifen 7 (genauer das 7,2-Fache). Der Abstand der Nocken 18 zum Ablageband ist hier auf 98 % der mittleren Höhe der Schicht eingestellt und nimmt in Laufrichtung des Ablagebandes 8a um 2 % ab.

Durch den leicht abnehmenden Abstand der Kämmfläche zum Ablageband 8a wird die abgelegte Schicht während des Kämmens ein wenig zusammengepreßt. Es entsteht eine geglättete Schicht gleichmäßiger Höhe. Durch eine verhältnismäßig geringe Geschwindigkeit des Ablagebandes 8a entsteht eine Schicht mit einer Höhe, die größer ist als die Höhe vor der Streuvorrichtung und damit als die Höhe der beim Stand der Technik erzeugten Schicht nach der Rückstreifwalze 9. Eine geringe Ablagebandgeschwindigkeit ermöglicht auch ein günstiges, d.h. großes, Geschwindigkeitsverhältnis zwischen Kämmwerkzeugen und Ablageband.

Am Ende des Ablagebandes 8a wird das Streugut mit Hilfe der der Höhe der Schicht entsprechend großen Abwurfwalze 21 auf das Streuband 8b, das eine größere Geschwindigkeit als das Ablageband 8a aufweist, geworfen. Auf dem streuband 8b entsteht eine wesentlich gleichförmigere Schicht als die, welche lediglich durch Ablegen hinter dem Fallschacht 5 gebildet wird.

Auf dem Streuband wird mit Hilfe der Meßvorrichtung 22 das Massenprofil quer über die Streubreite gemessen.

Dabei kann eine Meßvorrichtung 22 , bei der die Masse mit radioaktiven Isotopen (Gammastrahlenabsorption) bestimmt wird, aber auch eine Meßvorrichtung 22 zur mechanischen Wägung eingesetzt werden. Im Fall von feuchten Mischungen kann eine Meßvorrichtung 22 zur Messung der Masse des Wassers, z.B. durch Mikrowellendämpfung, eingesetzt werden. Durch die Messung des Massenprofiles jedes einzelnen Zwischenmassenstromes auf dem jeweiligen Streuband 8b und durch eine Rückkopplung zum Antrieb 17

4

des Fallschachtes 5 kann die Bewegung des einzelnen Fallschachtes 5 durch kleine Variationen seiner Translationsgeschwindigkeit individuell angepaßt werden.

Statt eines Bandes mit Nocken 18 kann auch eine Anordnung von nebeneinander geführten Ketten mit Nocken oder Stiften eingesetzt werden. Statt der stiftförmigen Kämmwerkzeuge können auch solche mit einer Breitenausdehnung, wie Paddeln und Leisten, verwendet werden. Im Falle von Paddeln können diese auch alternierend schräg angestellt sein, um so zusätzlich eine begrenzte seitliche Vergleichmäßigung zu erzielen.

Außerdem kann das Band oder die Walzen zur Vermeidung von Kondensation mit einer Heizvorrichtung versehen sein. Im Betrieb wird das Band mit den Kämmwerkzeugen auf eine Temperatur oberhalb des in der Umgebung des Ablagebandes 8a gegebenen Taupunktes aufgeheizt.

Beispiel 2:

Die Vorrichtung des Beispiels 2 unterscheidet sich von der des Beispiels 1 durch eine andere Ausführungsform der Kämmvorrichtung.

Die Kämmvorrichtung des Beispiels 2 weist mehrere senkrecht, in Laufrichtung des Ablagebandes 8a angeordnete Platten 24a, 24b, die in Laufrichtung vorne und hinten an je einer Kurbelwelle 25 exzentrisch aufgehängt sind, wobei sich die Platten 24a, 24b in Schlitzen der Kurbelwellen 25 befinden.

Die Kurbelwellen 25 sind parallel zueinander angeordnet und sind synchronisiert, d.h. weisen z.B. einen gemeinsamen Antrieb auf.

Die Platten 24a, 24b weisen an ihren zum Ablageband 8a weisenden Kanten, Zähne oder andere Kämmwerkzeuge auf. Diese Kämmwerkzeuge führen im Betrieb kreisförmige Bewegungen, wie mit dem Kreissymbol 26 angedeutet, durch und wirken dabei wie eine Vielzahl von ineinandergreifenden Stachelwalzen.

Die Kurbelwellen 25 sind (nicht dargestellt) einzeln höhenverstellbar angeordnet, so daß sowohl die gesamte Höhe (Pfeil 19) als auch der Winkel (Pfeil 20) der durch die Wirklinie 27 repräsentierte Kämmfläche verstellt werden kann. Entlang der Wirklinie 27 werden die oben erwähnten kreisförmigen Bewegungen vollzogen.

Die Platten 24a, 24b sind in etwa auf ihrer halben Höhe angebrachten Führungen 28 mit parallel zur Laufrichtung des Ablagebandes 8a verlaufenden Schlitzen geführt. Diese Führungen 28 verhindern ein unkontrolliertes seitliches Pendeln.

Zusätzlich kann eine Vorrichtung zum kontrollierten, seitlichen Ozillieren der Kurbelwellen 25 und/oder der Führungen 28 vorgesehen sein. Damit kann eine bessere Überdeckung der Schicht erzielt werden.

Statt der Platten 24a, 24b können auch Rahmen verwendet werden.

Der Antrieb mittels Kurbelwellen 25 ist nur ein Beispiel unter mehreren Möglichkeiten, eine alternierende Bewegung der Kämmwerkzeuge zu erzielen. Insbesondere kann die kreisförmige Bewegung, Kreissymbol 26, durch elliptische oder durch auf der Wirklinie 27 linear laufende Bewegungen ersetzt werden. Es liegt auch im Rahmen der Erfindung, daß die Kämmwerkzeuge quer zur Förderrichtung stehen und ineinandergreifend, alternierend kämmen.

Der wesentliche Vorteil dieser Ausführungsform ist, daß hiermit Probleme mit Verschmutzungen durch Staub, und im Falle von feuchtem und warmem Streugut, von Kondensation beherrscht werden können. Es werden alle Flächen mit horizontaler Komponente vermieden und der Antrieb wird aus der Staubzone gehalten.

Die Platten 24a, 24b oder Rahmen können zur Vermeidung von Kondensation zusätzlich mit Heizvorrichtungen versehen sein. Durch Beheizung der Platten 24a, 24b müssen keine drehenden Teile erhitzt werden.

Die Wirkungsweise der Erfindung wurde in einer Computersimulation berechnet. Die Berechnung nimmt vereinfachend an, daß die durch den Fallschacht 4 abgelegte Schicht eine Sockelhöhe von 3 cm hat und daß darüber eine sinusförmige Welle der Amplitude 6 cm liegt, so daß sich eine mittlere Höhe von 6 cm ergibt.

Die wirksame Länge (Tabelle 1, Zeile 1) ist angegeben als Vielfaches des Abstandes der Streifen 7. Der Abstand der Streifen 7 entspricht bei aneinander angelegten Streifen 7 der Breite der abgelegten Streifen 7. Die Ergebnisse der Simulation sind in der Tabelle 1 zusammengefaßt.

Im ersten Block der Tabelle wird die Höhe des tiefsten Punktes des Kämmbandes über dem Ablegeband variiert. Man erkennt, daß die beste Wirkung dicht unterhalb der mittleren Höhe der abgelegten Schicht erhalten wird. Die Wirkung stabilisiert sich bei geringeren Höhen auf gute Werten. Bei größerer Höhe als die mittlere Höhe der Schicht fällt die Wirksamkeit krass ab und es erscheinen einzelne Löcher in der abgeworfenen Schicht auf dem Streuband 8b.

5

Der zweite Block variiert die wirksame Länge. Man erkennt, daß unterhalb des 10-Fachen des Abstandes der Streifen 7 die Wirksamkeit abfällt.

Eine besonders gute Vergleichmäßigung erhält man daher, wenn die wirksame Länge das 10 bis 15-Fache des Abstandes der Streifen 7 beträgt.

Aber auch bei einer wirksamen Länge vom 7 bis 9-Fachen des Abstandes der Streifen 7 erzielt man wesentlich geringere Höhenschwankungen als beim Stand der Technik.

Der dritte Block der Tabelle variiert den Anstellwinkel der Kämmfläche; der Winkel ist hier in % Anstieg ausgedrückt. Es zeigt sich, daß negative Winkel wenig hilfreich sind und daß oberhalb von 2,5 % die Wirkung rasch nachläßt.

Bei weiteren Berechnungen zeigt sich, daß das Maß der Variation der abgelegten Schicht nur einen unerheblichen Einfluß auf das Ergebnis hat, solange die übrigen Parameter wie oben ermittelt eingehalten werden.

Die Streifen 7 müssen bei der Ablage durch den Fallschacht 4 nicht mehr präzise aneinander angelegt werden. Z.B. führen kleine Überlappungen der Streifen 7 nicht oder kaum zu einer Vergrößerung der Höhenschwankungen.

Beispiel: Der Fallschacht oszilliert mit einer mittleren Zykluszeit von 6 s. Die mittlere Breite der abgelegten Streifen ist 30 cm, die mittlere Höhe beträgt 6 cm, die Variation ist +/- 3 cm. Die Länge des Ablagebandes nach dem Auftreffpunkt des Streugutes ist 3,5 m, die der Kämmvorrichtung 3,3 m. Die Geschwindigkeit des Ablagebandes beträgt 3,0 m/min, die der Kämmvorrichtung 30 m/min. Die Höhe des untersten Angriffspunktes der Wirklinie der Nocken liegt bei 5 cm über dem Ablageband. Mit dieser Wahl erfaßt man auch Unterschiede in der Querverteilung von bis zu 15 %. Der Anstellwinkel ist 1 %. Man erreicht damit eine hervorragende Vergleichmäßigung der auf das Streuband 8b abgelegten Schicht und stellt sicher, daß das Streugut nicht länger auf dem Ablageband 8a verweilt, als der Bandgeschwindigkeit entspricht.

Die Geschwindigkeit des Streubandes 8b beträgt 6 m/min und entsprechend die Höhe der Schicht auf dem Band 30 mm. Bei einem Schüttgewicht von ca. 250 kg/m3 ergibt sich daraus eine Flächenbeladung von 7,5 kg/m2.

Nimmt man ein Flächengewicht des Streubandes 8b von 750 g/m2 und eine Variationsbreite von +/- 5 % an, so ist der durch das Band induzierte Meßfehler bei einer Massenmessung +/- 0,5 % am Streuband 8b.

TABELLE 1     COMPUTER-SIMULATION EINER KÄMMVORRICHTUNG

| Spalte | | 1 | 2 | 3 | 4 | 5 | 6 | 7 |
|---|---|---|---|---|---|---|---|---|
| wirksame Länge | | 10 | | | | | | |
| Amplitude Variation | cm | 6.0 | | | | | | |
| Sockelhöhe | cm | 3.0 | | | | | | |
| mittl. Höhe Streifen | cm | 6.0 | | | | | | |
| Maximum Höhe Streifen | cm | 9.0 | | | | | | |
| Minimum Höhe Streifen | cm | 3.0 | | | | | | |
| Standardabweichung | % | 35.5 | | | | | | |
| Endhöhe Rechen | cm | 5.0 | 5.5 | 5.8 | 5.85 | 5.9 | 5.95 | 6.0 |
| Steigung Rechen | % | 2.0 | | | | | | |
| mittl. Höhe Ergebnis | cm | 6.0 | 6.0 | 6.0 | 6.0 | 6.0 | 6.0 | 6.0 |
| Maximum Höhe Ergebnis | cm | 6.3 | 6.3 | 6.24 | 6.08 | 6.08 | 6.1 | 6.2 |
| Minimum Höhe Ergebnis | cm | 5.9 | 5.9 | 5.90 | 5.92 | 5.92 | 5.5 | 5.1 |
| Standardabweichung | % | 1.3 | 1.3 | 1.1 | 0.9 | 0.85 | 2.5 | 3.9 |
| Maximale Abweichung | % | 6.2 | 6.2 | 5.7 | 2.7 | 2.7 | 9.8 | 17.0 |

| Spalte | | 8 | 9 | 10 |
|---|---|---|---|---|
| wirksame Länge | | | | |
| Amplitude Variation | cm | | | |
| Sockelhöhe | cm | | | |
| mittl. Höhe Streifen | cm | | | |
| Maximum Höhe Streifen | cm | | | |
| Minimum Höhe Streifen | cm | | | |
| Standardabweichung | % | | | |
| Endhöhe Rechen | cm | 6.2 | 6.5 | 7.0 |
| Steigung Rechen | % | | | |
| mittl. Höhe Ergebnis | cm | 6.0 | 6.0 | 6.0 |
| Maximum Höhe Ergebnis | cm | 6.4 | 6.6 | 7.1 |
| Minimum Höhe Ergebnis | cm | 4.1 | 3.6 | 3.0 |
| Standardabweichung | % | 10.6 | 16.4 | 24.9 |
| Maximale Abweichung | % | 36.8 | 51.1 | 68.7 |

| Spalte | | 11 | 12 | 13 | 14 | 15 | 16 | 17 |
|---|---|---|---|---|---|---|---|---|
| wirksame Länge | | 20 | 15 | 10 | 8 | 7 | 5 | 3 |
| Amplitude Variation | cm | 6.0 | | | | | | |
| Sockelhöhe | cm | 3.0 | | | | | | |
| mittl. Höhe Streifen | cm | 6.0 | | | | | | |
| Maximum Höhe Streifen | cm | 9.0 | | | | | | |
| Minimum Höhe Streifen | cm | 3.0 | | | | | | |
| Standardabweichung | % | 3.5 | | | | | | |
| Endhöhe Rechen | cm | 5.9 | | | | | | |
| Steigung Rechen | % | 2.0 | | | | | | |
| mittl. Höhe Ergebnis | cm | 6.0 | 6.0 | 6.0 | 6.0 | 6.0 | 6.0 | 6.0 |
| Maximum Höhe Ergebnis | cm | 6.08 | 6.08 | 6.08 | 6.1 | 6.2 | 6.3 | 6.4 |
| Minimum Höhe Ergebnis | cm | 5.94 | 5.93 | 5.92 | 5.7 | 5.5 | 4.7 | 4.1 |
| Standardabweichung | % | 0.66 | 0.83 | 0.85 | 1.59 | 2.57 | 5.82 | 8.9 |
| Maximale Abweichung | % | 2.3 | 2.5 | 2.7 | 7.2 | 10.9 | 26.3 | 38.7 |

| Spalte | | 18 | 19 | 20 | 21 | 22 |
|---|---|---|---|---|---|---|
| wirksame Länge | | 10 | | | | |
| Amplitude Variation | cm | 6.0 | | | | |
| Sockelhöhe | cm | 3.0 | | | | |
| mittlere Höhe Streifen | cm | 6.0 | | | | |
| Maximum Höhe Streifen | cm | 9.0 | | | | |
| Minimum Höhe Streifen | cm | 3.0 | | | | |
| Standardabweichung | % | 35.5 | | | | |
| Endhöhe Rechen | cm | 5.9 | | | | |
| Steigung Rechen | % | -1.0 | -0.5 | 0.0 | 0.5 | 1.0 |
| mittlere Höhe Ergebnis | cm | 6.0 | 6.0 | 6.0 | 6.0 | 6.0 |
| Maximum Höhe Ergebnis | cm | 7.5 | 7.2 | 6.8 | 6.1 | 6.1 |
| Minimum Höhe Ergebnis | cm | 5.8 | 5.8 | 5.9 | 6.0 | 6.0 |
| Standardabweichung | % | 7.65 | 5.8 | 4.55 | 0.35 | 0.65 |
| Maximale Abweichung | % | 29.4 | 22.8 | 15.4 | 1.3 | 2.3 |

| Spalte | | 23 | 24 | 25 | 26 |
|---|---|---|---|---|---|
| wirksame Länge | cm | | | | |
| Amplitude Veriation | cm | | | | |
| Sockelhöhe | cm | | | | |
| mittlere Höhe Streifen | cm | | | | |
| Maximum Höhe Streifen | cm | | | | |
| Minimum Höhe Streifen | cm | | | | |
| Standardabweichung | % | | | | |
| Endhöhe Rechen | cm | | | | |
| Steigung Rechen | % | 1.5 | 2.0 | 2.5 | 3.0 |
| mittlere Höhe Ergebnis | cm | 6.0 | 6.0 | 6.0 | 6.0 |
| Maximum Höhe Ergebnis | cm | 6.2 | 6.1 | 6.1 | 6.4 |
| Minimum Höhe Ergebnis | cm | 5.9 | 5.9 | 5.8 | 5.4 |
| Standardabweichung | % | 0.9 | 0.85 | 1.55 | 3.2 |
| Maximale Abweichung | % | 2.8 | 2.7 | 5.9 | 16.4 |

**Patentansprüche**

1. Verfahren zur kontinuierlichen Bildung einer gleichförmigen Schicht von Streugut, wobei das ankommende Streugut zu mindestens einem Zwischenmassenstrom umgebildet, jeder Zwischenmassenstrom quer zur Laufrichtung eines Ablagebandes in Streifen auf dieses abgelegt, durch eine in Laufrichtung des Ablagebandes kämmende Kämmvorrichtung geglättet und mit einer Streuvorrichtung auf ein Formband gestreut wird, dadurch gekennzeichnet, daß jeder Zwischenmassenstrom mit der Kämmvorrichtung über eine sich in Laufrichtung des Ablagebandes (8a) ausdehnende Kämmfläche geglättet wird, wobei die wirksame Länge der Kämmfläche mindestens auf das 7-Fache des Abstandes zweier Streifen (7) und der Abstand der Kämmfläche zum Ablageband (8a) auf einen Wert, der wenig unterhalb der mittleren Höhe der durch die Streifen (7) gebildeten Schicht liegt und der in Laufrichtung des Ablagebandes (8a) leicht abnimt, eingestellt werden.

2. Verfahren nach Anspruch 1, dadurch gekennzeichnet, daß der Abstand der Kämmfläche zum Ablageband (8a) auf 70 bis 98 % der mittleren Höhe der durch die Streifen (7) gebildeten Schicht eingestellt wird.

3. Verfahren nach Anspruch 1 oder 2, dadurch gekennzeichnet, daß der Abstand der Kammfläche zum Ablageband (8a) um einen Wert zwischen 0 und 3 % in Laufrichtung des Ablagebandes (8a) abnimmt.

4. Verfahren nach einem der Ansprüche 1 bis 3, dadurch gekennzeichnet, daß der Zwischenmassenstrom nach dem Glätten und vor dem Streuen auf einem Streuband (8b) abgelegt wird.

5. Verfahren nach einem der Ansprüche 1 bis 4, dadurch gekennzeichnet, daß das Massenprofil des Zwischenmassenstromes auf dem Streuband (8b) gemessen wird und zur Steuerung der Ablagegeschwindigkeit der Streifen (7) verwendet wird.

6. Verfahren nach Anspruch 5, bei dem das Streugut Wasser enthält, dadurch gekennzeichnet, daß das Massenprofil des Zwischenmassenstromes durch Messung der Wassermasse ermittelt wird.

7. Vorrichtung zur Durchführung des Verfahrens nach Anspruch 1, mit einem Band für das ankommende Streugut, ggf. mit einer Verteilvorrichtung und Zuführbändern, mit mindestens einem Fallschacht, einem Ablageband, einer Kämmvorrichtung und einer Streuvorrichtung, wobei der Fallschacht und die Kämmvorrichtung oberhalb des Ablagebandes in Laufrichtung des Zwischenmassenstromes hintereinander angeordnet sind, und einem unterhalb der oder den Streuvorrichtungen angeordneten Formband, dadurch gekennzeichnet, daß die Kämmvorrichtung einen oder mehrere bewegliche, sich in Laufrichtung des Ablagebandes (8a) erstreckende Träger mit Kammwerkzeugen, die eine Kämmfläche bilden, aufweist, wobei die Träger höhen- und in Laufrichtung des Ablagebandes (8a) winkelverstellbar angeordnet sind.

8. Vorrichtung nach Anspruch 7, dadurch gekennzeichnet, daß die Länge des Ablagebandes (8a) ausgehend vom Fallschacht (5) ein Vielfaches, vorzugsweise das 8 bis 15-Fache der unteren Öffnung des Fallschachtes (5) beträgt und sich die Träger der Kämmvorrichtung über die gesamte freie Länge des Ablagebandes (8a) erstrecken.

9. Vorrichtung nach einem der Ansprüche 7 oder 8, dadurch gekennzeichnet, daß die Kämmvorrichtung ein Band mit Kammwerkzeugen aufweist, wobei das Band um zwei einzeln höhenverstellbare Walzen angeordnet ist.

10. Vorrichtung nach einem der Ansprüche 7 oder 8, dadurch gekennzeichnet, daß die Kämmvorrichtung mehrere senkrecht, in Laufrichtung des Ablagebandes angeordnete Platten (24a, 24b) oder Rahmen aufweist, die an zwei einzeln höhenverstellbaren Kurbelwellen (25) exzentrisch aufgehängt sind.

11. Vorrichtung nach einem der Ansprüche 7 bis 10, dadurch gekennzeichnet, daß anschließend an das Ablageband (8a) vor der Streuvorrichtung ein Streuband (8b) angeordnet ist.

12. Vorrichtung nach einem der Ansprüche 8 bis 12, dadurch gekennzeichnet, daß an dem Streuband (8b) eine Meßvorrichtung (22) zur Bestimmung des Massenprofiles angeordnet ist.

## Claims

1. Method for continuously forming a uniform layer of loose material, the incoming loose material being converted into at least one intermediate mass flow, each intermediate mass flow being deposited transversely to the direction of travel of a depositing belt in strips on the latter, being smoothed out by a combing device combing in the direction of travel of the depositing belt and being spread by a spreading device on a forming belt, characterised in that each intermediate mass flow is smoothed out by the combing device over a combing surface extending in the direction of travel of the depositing belt

10

(8a), the effective length of the combing surface being adjusted to at least seven times the distance between two strips (7) and the distance of the combing surface from the depositing belt (8a) being adjusted to a value which lies slightly below the average height of the layer formed by the strips (7) and which decreases slightly in the direction of travel of the depositing belt (8a).

2. Method according to Claim 1, characterised in that the distance of the combing surface from the depositing belt (8a) is adjusted to 70 to 98% of the average height of the layer formed by the strips (7).

3. Method according to Claim 1 or 2, characterised in that the distance of the combing surface from the depositing belt (8a) decreases by a value between 0 and 3% in the direction of travel of the depositing belt (8a).

4. Method according to one of Claims 1 to 3, characterised in that after smoothing out and before spreading, the intermediate mass flow is deposited on a spreading belt (8b).

5. Method according to one of Claims 1 to 4, characterised in that the mass profile of the intermediate mass flow on the spreading belt (8b) is measured and is used for controlling the depositing speed of the strips (7).

6. Method according to Claim 5, in which the loose material contains water, characterised in that the mass profile of the intermediate mass flow is ascertained by measuring the mass of water.

7. Apparatus for carrying out the method according to Claim 1, with a belt for the incoming loose material, possibly with a distribution device and feed belts, with at least one chute, a depositing belt, a combing device and a spreading device, the chute and the combing device being disposed one behind the other above the depositing belt in the direction of travel of the intermediate mass flow and a forming belt located below the spreading device or devices, characterised in that the combing device comprises one or more movable supports extending in the direction of travel of the depositing belt (8a), with combing tools forming a combing surface, the supports being vertically adjustable and angularly adjustable in the direction of travel of the depositing belt (8a).

8. Apparatus according to Claim 7, characterised in that starting from the chute (5), the length of the depositing belt (8a) amounts to a multiple, preferably to 8 to 15 times the lower opening of the chute (5) and the supports of the combing device extend over the entire free length of the depositing belt (8a).

9. Apparatus according to one of Claims 7 or 8, characterised in that the combing device comprises a belt with combing tools, the belt being disposed around two rollers which are individually vertically adjustable.

10. Apparatus according to one of Claims 7 or 8, characterised in that the combing device comprises several plates (24a, 24b) or frames arranged vertically, in the direction of travel of the depositing belt, which plates are suspended eccentrically from two individually vertically adjustable crank shafts (25).

11. Apparatus according to one of Claims 7 to 10, characterised in that a spreading belt (8b) is disposed adjoining the depositing belt (8a) in front of the spreading device.

12. Apparatus according to one of Claims 8 to 12, characterised in that located on the spreading belt (8b) is a measuring device (22) for determining the mass profile.

## Revendications

1. Procédé de formation continue d'une couche uniforme de matériau d'épandage, le matériau amené étant transformé en un débit-masse intermédiaire, au moins, chaque débit-masse intermédiaire étant déposé en bandes sur une courroie de réception, à la transversale du sens de défilement de cette dernière, étant lissé par un dispositif de peignage, qui travaille dans le sens de défilement de la courroie de réception, et étant épandu sur une courroie de moulage par un dispositif d'épandage, caractérisé en ce que chaque débit-masse intermédiaire est lissé par le dispositif de peignage sur une surface qui s'étend dans le sens de défilement de la courroie de réception (8a), la longueur effective de la surface de peignage étant réglée au septuple, au moins, de la distance entre deux bandes (7), et l'écartement de la surface de peignage par rapport à la courroie de réception (8a) étant réglé à une valeur légèrement inférieure à la hauteur moyenne de la couche formée par les bandes (7), et qui décroît légèrement dans le sens de défilement de la courroie de réception (8a).

2. Procédé suivant la revendication 1, caractérisé en ce que l'écartement de la surface de peignage par rapport à la courroie de réception (8a) est réglé à 70 - 98% de la hauteur moyenne de la couche, formée par les bandes (7).

3. Procédé suivant l'une des revendications 1 ou 2, caractérisé en ce que l'écartement de la surface de peignage par rapport à la courroie de réception (8a) diminue d'une valeur de 0 à 3 % dans le sens de défilement de la courroie de réception (8a).

4. Procédé suivant l'une quelconque des revendications 1 à 3, caractérisé en ce que le débit-masse intermédiaire est déposé sur une courroie d'épandage (8b), après le lissage et avant l'épandage.

5. Procédé suivant l'une quelconque des revendications 1 à 4, caractérisé en ce que le profil de masse du débit-masse intermédiaire est mesuré sur la courroie d'épandage (8b), et est utilisé pour le contrôle de la vitesse de dépôt des bandes (7).

6. Procédé suivant la revendication 5, dans lequel le matériau d'épandage renferme de l'eau, caractérisé en ce que le profil de masse du débit-masse intermédiaire est déterminé par la mesure de la masse d'eau.

7. Dispositif pour la réalisation du procédé suivant la revendication 1, avec une courroie pour le matériau d'épandage amené, avec éventuellement un distributeur et des courroies d'alimentation, avec un couloir de descente, au moins, une courroie de réception, un dispositif de peignage et un dispositif d'épandage, le couloir de descente et le dispositif de peignage étant disposés l'un derrière l'autre au-dessus de la courroie de réception, dans le sens de défilement du débit-masse intermédiaire, et avec une courroie de moulage prévue au-dessous du ou des dispositifs d'épandage, caractérisé en ce que le dispositif de peignage présente un ou plusieurs supports mobiles, s'étendant dans le sens de défilement de la courroie de réception (8a) et munis d'outils-peignes, qui forment une surface de peignage, les supports étant disposés avec une possibilité de réglage en hauteur et, dans le sens de défilement de la courroie de réception (8a), de réglage en angle.

8. Dispositif suivant la revendication 7, caractérisé en ce que la longueur de la courroie de réception (8a), à partir du couloir de descente (5), est un multiple de l'ouverture inférieure du couloir (5), est 8 à 15 fois plus élevée, de préférence, et en ce que les supports du dispositif de peignage s'étendent sur toute la longueur libre de la courroie de réception (8a).

9. Dispositif suivant l'une quelconque des revendications 7 ou 8, caractérisé en ce que le dispositif de peignage présente une courroie avec des outils-peignes, la courroie étant disposée autour de deux cylindres dotés d'une possibilité individuelle de réglage en hauteur.

10. Dispositif suivant l'une quelconque des revendications 7 ou 8, caractérisé en ce que le dispositif de peignage présente plusieurs plaques (24a, 24b) ou châssis, disposés à la verticale dans le sens de défilement de la courroie de réception, accrochés et excentrés sur deux vilebrequins (25) dotés d'une possibilité individuelle de réglage en hauteur.

11. Dispositif suivant l'une quelconque des revendications 7 à 10, caractérisé en ce qu'une courroie d'épandage (8b) est disposée à la suite de la courroie de réception (8a), en amont du dispositif d'épandage.

12. Dispositif suivant l'une quelconque des revendications 8 à 12, caractérisé en ce qu'un dispositif de mesure (22) pour la détermination du profil de masse est disposé sur la courroie d'épandage (8b).

FIGUR 1

EP 0 600 987 B1

FIGUR 2

**FIGUR 3**